(19) **Europäisches Patentamt / European Patent Office / Office européen des brevets**

(11) **EP 4 492 341 B1**

(12) **EUROPEAN PATENT SPECIFICATION**

(45) Date of publication and mention
of the grant of the patent:
**17.06.2026  Bulletin 2026/25**

(21) Application number: **22937378.2**

(22) Date of filing: **12.04.2022**

(51) International Patent Classification (IPC):
**G06V 30/414** *(2022.01)*     **G06V 30/262** *(2022.01)*
**G06V 30/412** *(2022.01)*     **G06V 30/422** *(2022.01)*
**G06V 30/10** *(2022.01)*       **G06V 30/18** *(2022.01)*
**G06V 30/19** *(2022.01)*

(52) Cooperative Patent Classification (CPC):
**G06V 30/18; G06V 30/10; G06V 30/19007;
G06V 30/1916; G06V 30/262; G06V 30/268;
G06V 30/412; G06V 30/414; G06V 30/422**

(86) International application number:
**PCT/JP2022/017581**

(87) International publication number:
**WO 2023/199398 (19.10.2023 Gazette 2023/42)**

(54) **INFORMATION PROCESSING DEVICE, PROCESSING METHOD, AND PROCESSING PROGRAM**

INFORMATIONSVERARBEITUNGSVORRICHTUNG, VERARBEITUNGSVERFAHREN UND
VERARBEITUNGSPROGRAMM

DISPOSITIF DE TRAITEMENT D'INFORMATIONS, PROCÉDÉ DE TRAITEMENT ET PROGRAMME
DE TRAITEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2025  Bulletin 2025/03**

(73) Proprietor: **MITSUBISHI ELECTRIC
CORPORATION
Chiyoda-ku
Tokyo 100-8310 (JP)**

(72) Inventors:
• **ITANI Yusuke
  Tokyo 100-8310 (JP)**

• **MITSUI Yoshiki
  Tokyo 100-8310 (JP)**

(74) Representative: **Pfenning, Meinig & Partner mbB
Patent- und Rechtsanwälte
Theresienhöhe 11a
80339 München (DE)**

(56) References cited:
**WO-A1-2020/054067       WO-A1-2020/054067
JP-A- 2006 227 824        JP-A- 2006 227 824
JP-A- 2013 161 463        US-A- 5 251 268
US-A1- 2017 228 589       US-A1- 2020 175 211
US-A1- 2020 175 372**

EP 4 492 341 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

## TECHNICAL FIELD

The present disclosure relates to an information processing device, a processing method and a processing program.

## BACKGROUND ART

There has been known an image analysis device. The image analysis device analyzes an image. For example, symbols and character strings are included in the image as the analysis object. There has been known a technology for extracting symbols and character strings (see Patent Reference 1 or Non-patent Reference 1). US2017228589A1 discloses a method of configuring devices of a control system in a plant using a configuration server. The method comprises importing an engineering graphic object, detecting a plurality of textual elements and graphic elements, identifying a set of textual elements and a set of graphic elements as legends, associating the set of graphic elements with corresponding textual elements and the set of textual elements with a corresponding graphic elements, updating a symbol vocabulary and a device label vocabulary using the set of graphic elements and the set of textual elements, associating one or more graphic elements and one or more textual elements from the plurality of graphic elements and the plurality of textual elements with corresponding devices, determining control information of a device based on the associated graphic elements and associated textual elements, and generating a plurality of engineering artifacts based on the control information. US5251268A discloses an apparatus and method for recognizing written items including characters and symbols is disclosed.
US2020175372A1 discloses systems and methods for automating information extraction from piping and instrumentation diagrams.
WO2020054067A1 discloses an image information processing device including: a recognition processing unit which recognizes, from input image data, a plurality of image elements which are a plurality of regions; and an integration processing unit which extracts image elements of processing targets from the plurality of image elements and performs integration processing that is processing for associating the extracted image elements with each other. JP2006227824A discloses a method of performing recognition processing of CAD data from electronic data on a drawing wherein a character and a figure are mixed, in a short time with high accuracy. US2020175211A1 discloses a method of recognizing and classifying design information by automatically digitizing an imaged P&ID drawing to digitize design information by totaling design elements with high accuracy within a short time, and another aspect of the present disclosure is to obtain an imaged P&ID drawing or a database stored in a text form as a digitized drawing by modeling a symbol, line, and text in an intelligent P&ID, thereby accurately and rapidly quoting a price and accurately checking compatibility between different design products.

### PRIOR ART REFERENCE

### PATENT REFERENCE

Patent Reference 1: Japanese Patent No. 6076128

### NON-PATENT REFERENCE

Non-patent Reference 1: Shogo Yoneyama, Takashi Hirano and Yasuhiro Okada, "Extracting Symbol Information in Engineering Drawing Image", March Proceedings of the IEICE General Conference, March 2006
Non-patent Reference 2: T. Hirano et al., "Structural Character Recognition Using Simulated Annealing", ICDAR 1997, Aug. 1997

## SUMMARY OF THE INVENTION

## PROBLEM TO BE SOLVED BY THE INVENTION

Incidentally, there are cases where a plurality of character strings exist around a symbol. In such cases, there is a problem in that it is unclear which character string and the symbol are associated with each other.
An object of the present disclosure is to make a determination on appropriate association.

**MEANS FOR SOLVING THE PROBLEM**

The invention is defined in the appended set of claims. An information processing device according to an aspect of the present disclosure is provided. The information processing device includes an acquisition unit that acquires an image including a first symbol and a plurality of character strings and relationship information indicating a correspondence relationship between a symbol and a character string, an extraction unit that extracts the first symbol and the plurality of character strings based on the image, a distance calculation unit that calculates distances between the first symbol and the plurality of character strings based on a position of the first symbol and positions of the plurality of character strings, and a determination unit that determines a character string having a relationship with the first symbol based on the relationship information and the distances.

**EFFECT OF THE INVENTION**

According to the present disclosure, it is possible to make a determination on appropriate association.

**BRIEF DESCRIPTION OF THE DRAWINGS**

Fig. 1 is a diagram showing hardware included in an information processing device in a first embodiment.
Fig. 2 is a block diagram showing functions of the information processing device in the first embodiment.
Fig. 3 is a diagram showing an example of an image in the first embodiment.
Fig. 4 is a diagram showing an example of an extraction result in the first embodiment.
Fig. 5 is a diagram showing an example of a relationship table in the first embodiment.
Fig. 6 is a block diagram showing functions of an association determination unit in the first embodiment.
Fig. 7 is a flowchart showing an example of a process executed by the information processing device in the first embodiment.
Fig. 8 is a block diagram showing functions of an information processing device in a second embodiment.
Fig. 9 is a block diagram showing functions of an association determination unit in the second embodiment.
Fig. 10 is a flowchart showing an example of a process executed by the information processing device in the second embodiment.
Fig. 11 is a block diagram showing functions of an information processing device in a third embodiment.
Fig. 12 is a diagram showing an example of correction information in the third embodiment.
Fig. 13 is a flowchart showing an example of a process executed by the information processing device in the third embodiment.
Fig. 14 is a block diagram showing functions of an information processing device in a fourth embodiment.
Fig. 15 is a diagram showing an example of correction information in the fourth embodiment.
Fig. 16 is a block diagram showing functions of an association determination unit in the fourth embodiment.
Fig. 17 is a diagram showing an example of the image in the fourth embodiment.
Fig. 18 is a diagram showing an example of a determination result list in the fourth embodiment.

**MODE FOR CARRYING OUT THE INVENTION**

Embodiments will be described below with reference to the drawings. The following embodiments are just examples and a variety of modifications are possible within the scope of the present disclosure.

First Embodiment

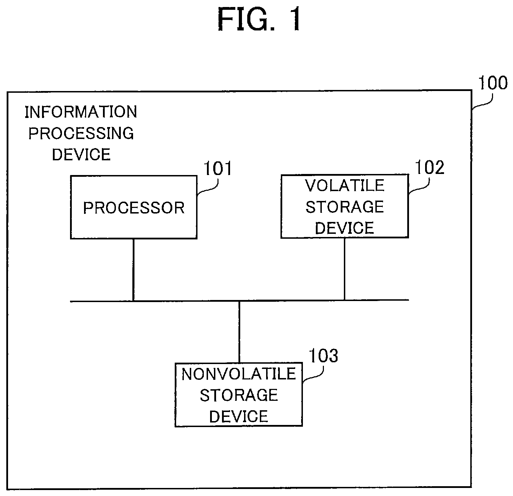

Fig. 1 is a diagram showing hardware included in an information processing device in a first embodiment. The information processing device 100 is a device that executes a processing method. The information processing device 100 includes a processor 101, a volatile storage device 102 and a nonvolatile storage device 103.
The processor 101 controls the whole of the information processing device 100. The processor 101 is a Central Processing Unit (CPU), a Field Programmable Gate Array (FPGA) or the like, for example. The processor 101 can also be a multiprocessor. Further, the information processing device 100 may include processing circuitry.
The volatile storage device 102 is main storage of the information processing device 100. The volatile storage device 102 is a Random Access Memory (RAM), for example. The nonvolatile storage device 103 is auxiliary storage of the information processing device 100. The nonvolatile storage device 103 is a Hard Disk Drive (HDD) or a Solid State Drive (SSD), for example.

Further, the information processing device 100 may include a scanner or a camera.

Next, functions included in the information processing device 100 will be described below.

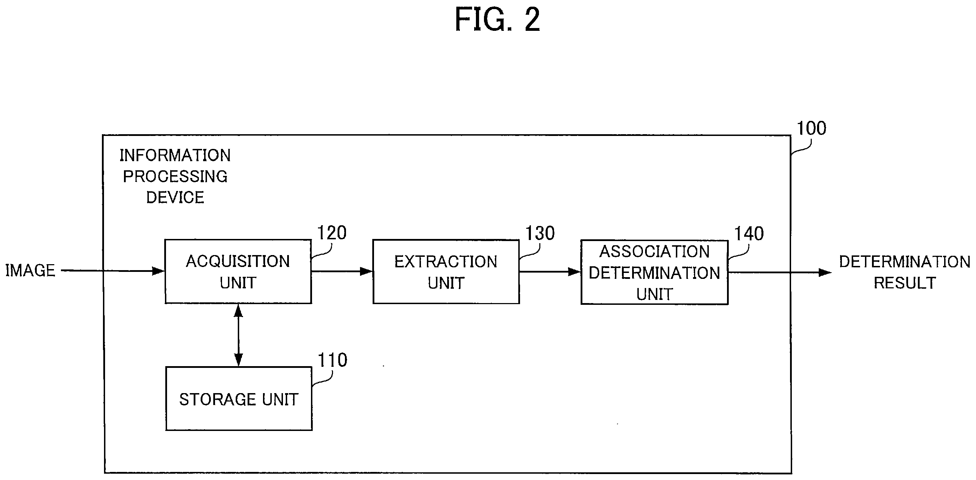

Fig. 2 is a block diagram showing the functions of the information processing device in the first embodiment. The information processing device 100 includes a storage unit 110, an acquisition unit 120, an extraction unit 130 and an association determination unit 140.

The storage unit 110 may be implemented as a storage area reserved in the volatile storage device 102 or the nonvolatile storage device 103.

Part or all of the acquisition unit 120, the extraction unit 130 and the association determination unit 140 may be implemented by processing circuitry. Further, part or all of the acquisition unit 120, the extraction unit 130 and the association determination unit 140 may be implemented as modules of a program executed by the processor 101. For example, the program executed by the processor 101 is referred to also as a processing program. The processing program has been recorded in a record medium, for example.

The acquisition unit 120 acquires an image. For example, in the case where the information processing device 100 includes a camera, the acquisition unit 120 acquires an image obtained by the camera by photographing a target object. Alternatively, for example, the acquisition unit 120 acquires the image from an external device. Incidentally, illustration of the external device is left out. Here, the image will be shown below.

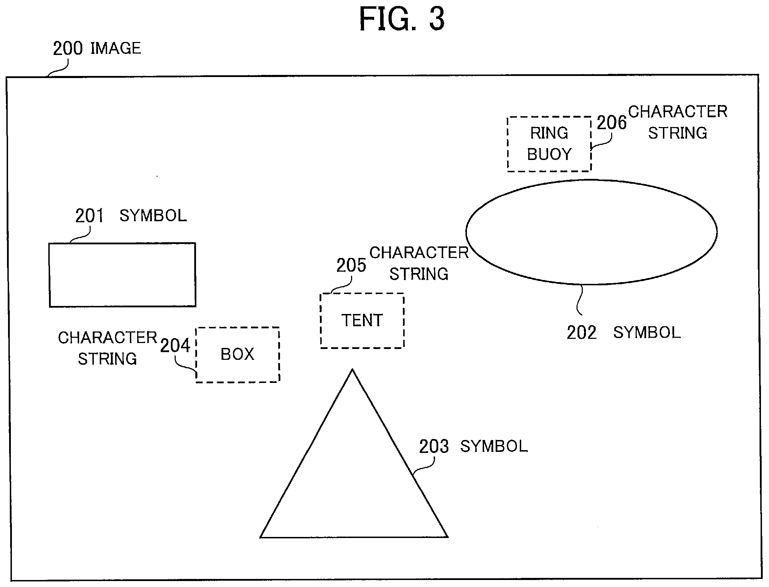

Fig. 3 is a diagram showing an example of the image in the first embodiment. The image 200 is the image acquired by the acquisition unit 120. The image 200 includes symbols 201 to 203 and character strings 204 to 206.

The extraction unit 130 extracts the symbols 201 to 203 and the character strings 204 to 206 based on the image 200. For example, the extraction unit 130 extracts the symbols 201 to 203 and the character strings 204 to 206 by using an extraction method described in the Patent Reference 1 or the Non-patent Reference 1. The result of the extraction will be shown below.

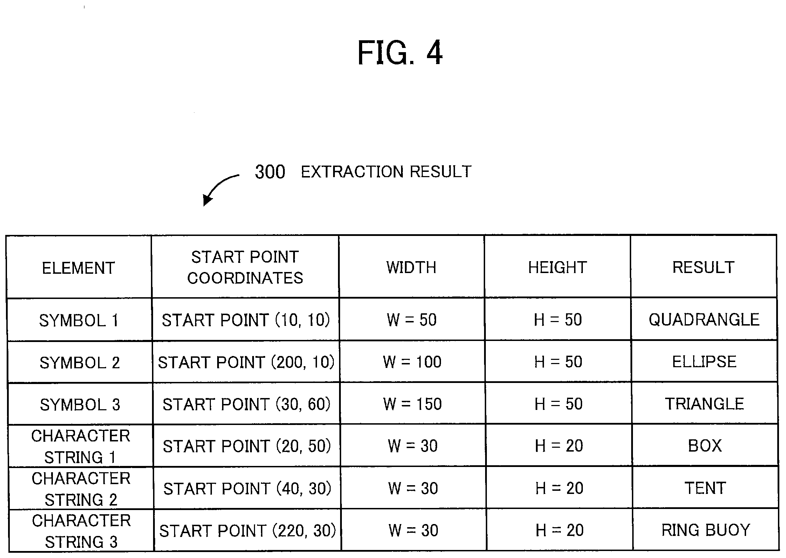

Fig. 4 is a diagram showing an example of the extraction result in the first embodiment. The extraction result 300 includes items of element, start point coordinates, width, height and result. For example, the extraction result 300 indicates that the start point coordinates of a symbol 1 (i.e., the symbol 201) are (10, 10). For example, the extraction result 300 indicates that the width of the symbol 1 is "50" and the height of the symbol 1 is "50". Further, the extraction result 300 indicates that the shape of the symbol 1 is a quadrangle.

The extraction result 300 may include central coordinates of the symbol instead of the start point coordinates. Here, the start point coordinates, the central coordinates and the like are referred to as position coordinates.

The acquisition unit 120 acquires a relationship table. For example, the acquisition unit 120 acquires the relationship table from the storage unit 110. Alternatively, the acquisition unit 120 acquires the relationship table from an external device. Here, the relationship table will be shown below.

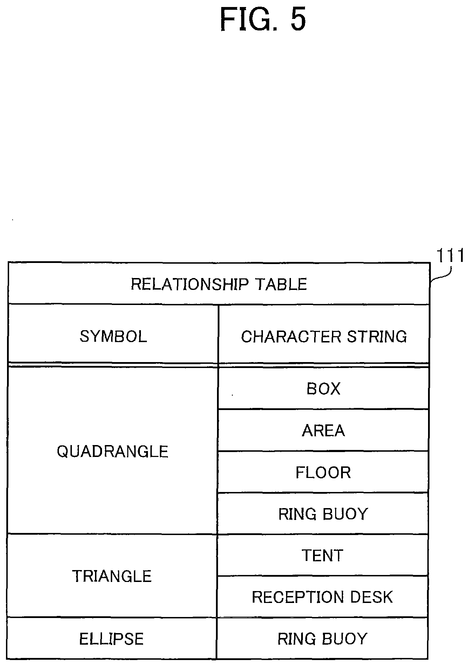

Fig. 5 is a diagram showing an example of the relationship table in the first embodiment. For example, the relationship table 111 has been stored in the storage unit 110. The relationship table 111 is referred to also as relationship information. The relationship table 111 is information indicating a correspondence relationship between a symbol and a character string. For example, the relationship table 111 indicates that "quadrangle" has relationship with "box", "area", "floor" and "ring buoy".

Next, the association determination unit 140 will be described below.

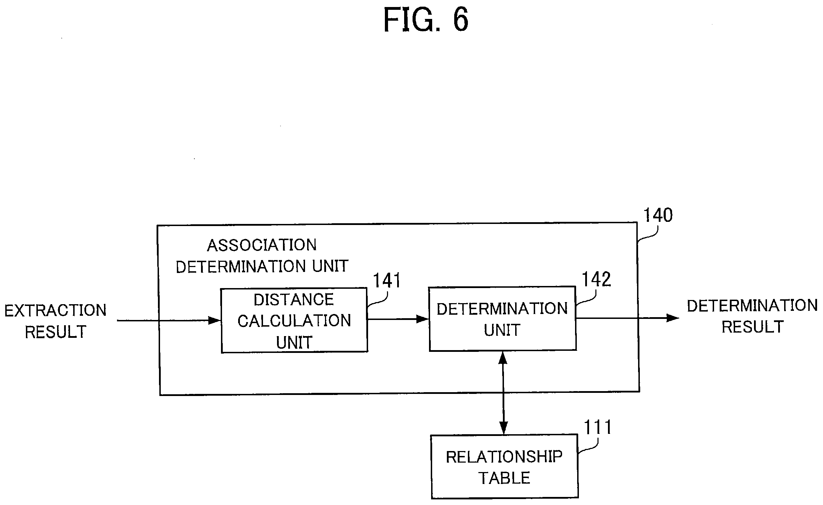

Fig. 6 is a block diagram showing functions of the association determination unit in the first embodiment. The association determination unit 140 includes a distance calculation unit 141 and a determination unit 142.

The distance calculation unit 141 calculates distances between one symbol and a plurality of character strings based on the position of the symbol and the positions of the plurality of character strings. Here, this symbol is referred to also as a first symbol.

For example, the distance L1 between the symbol 201 and the character string 204 is calculated according to expression (1). Specifically, the distance calculation unit 141 calculates the distance L1 based on the position coordinates of the symbol 201 and the position coordinates of the character string 204.

$$L1 = \sqrt{(10 - 20)^2 + (10 - 50)^2} = \sqrt{1700} \qquad \cdots (1)$$

The distance L2 between the symbol 201 and the character string 205 is calculated according to expression (2).

$$L2 = \sqrt{(10 - 40)^2 + (10 - 30)^2} = \sqrt{1300} \qquad \cdots (2)$$

The distance L3 between the symbol 201 and the character string 206 is calculated according to expression (3).

$$L3 = \sqrt{(10 - 220)^2 + (10 - 30)^2} = \sqrt{44500} \qquad \cdots (3)$$

The distance calculation unit 141 calculates the distances between the symbol 202 and the character strings 204 to 206 in a similar manner. Further, the distance calculation unit 141 calculates the distances between the symbol 203 and the character strings 204 to 206 in a similar manner. Incidentally, the distance may be either represented by the Euclidean distance or represented by different representation.

The determination unit 142 determines a character string having a relationship with a symbol based on the relationship table 111 and the distances. In the following, a description will be given of a case of determining a character string having a relationship with the symbol 201. Here, the distances are used in ascending order. According to the above-described calculation results, the distance L2 is the smallest. Therefore, the character string 205 is considered to have a relationship with the symbol 201. The determination unit 142 refers to the relationship table 111. Based on the relationship table 111, the determination unit 142 determines that the symbol 201 (i.e., quadrangle) and the character string 205 (i.e., tent) have no relationship with each other. Subsequently, the determination unit 142 selects the distance L1 that is the second smallest distance. The determination unit 142 refers to the relationship table 111. Based on the relationship table 111, the determination unit 142 determines that the symbol 201 (i.e., quadrangle) and the character string 204 (i.e., box) have a relationship with each other.

The determination unit 142 determines a character string having a relationship with the symbol 202 in a similar manner. Further, the determination unit 142 determines a character string having a relationship with the symbol 203 in a similar manner.

The association determination unit 140 outputs a determination result.

Next, a process executed by the information processing device 100 will be described below by using a flowchart.

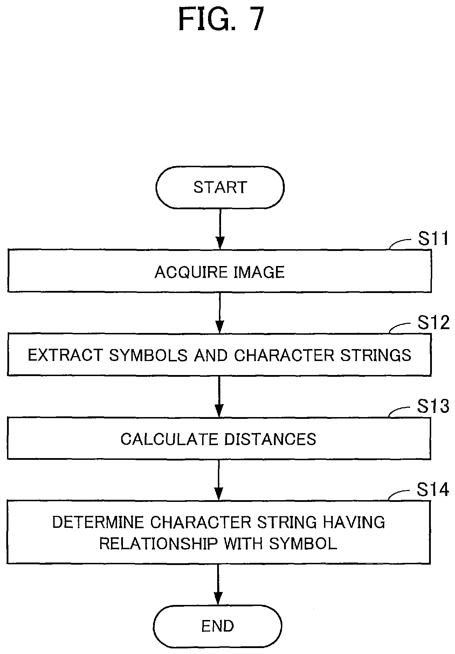

Fig. 7 is a flowchart showing an example of the process executed by the information processing device in the first embodiment.

(Step S11) The acquisition unit 120 acquires the image 200.

(Step S12) The extraction unit 130 extracts the symbols 201 to 203 and the character strings 204 to 206.

(Step S13) The distance calculation unit 141 calculates the distances between the symbol 201 and the character strings 204 to 206. The distance calculation unit 141 calculates the distances between the symbol 202 and the character strings 204 to 206. The distance calculation unit 141 calculates the distances between the symbol 203 and the character strings 204 to 206.

(Step S14) The determination unit 142 determines a character string having a relationship with the symbol 201 based on the relationship table 111 and the distances. The determination unit 142 determines a character string having a relationship with the symbol 202 based on the relationship table 111 and the distances. The determination unit 142 determines a character string having a relationship with the symbol 203 based on the relationship table 111 and the distances.

For example, the character strings 204 to 206 exist around the symbol 201. The information processing device 100 determines that the symbol 201 and the character string 204 have a relationship with each other. Thus, according to the first embodiment, the information processing device 100 is capable of making a determination on appropriate association.

Further, the determination unit 142 determines a character string having a relationship with a symbol based on distances less than or equal to a predetermined threshold value TH among the plurality of calculated distances and the relationship table 111. In other words, the determination unit 142 does not make the determination on whether a character string has a relationship with the symbol or not by using a distance larger than the threshold value TH among the plurality of distances. When the distance between the symbol and a character string is large, the symbol and the character string have no relationship with each other. Therefore, distances larger than the threshold value TH are excluded from information for making the determination. Further, thanks to the exclusion of the distances larger than the threshold value TH, the number of times the determination unit 142 refers to the relationship table 111 decreases. Accordingly, the processing time is shortened.

Second Embodiment

Next, a second embodiment will be described below. In the second embodiment, the description will be given mainly of features different from those in the first embodiment. In the second embodiment, the description is omitted for features in common with the first embodiment.

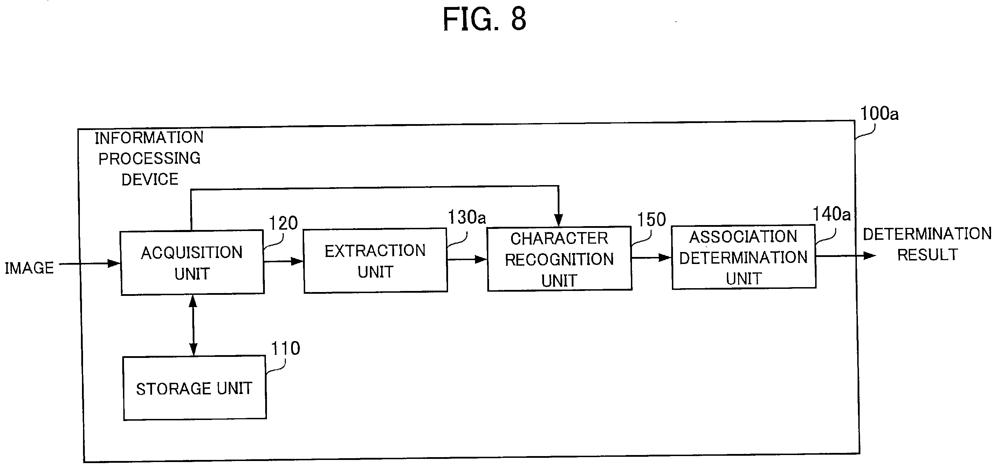

Fig. 8 is a block diagram showing functions of an information processing device in the second embodiment. Each component in Fig. 8 that is the same as a component shown in Fig. 2 is assigned the same reference character as in Fig. 2.

The information processing device 100a includes an extraction unit 130a, an association determination unit 140a and a character recognition unit 150. Part or all of the extraction unit 130a, the association determination unit 140a and the character recognition unit 150 may be implemented by processing circuitry. Further, part or all of the extraction unit 130a, the association determination unit 140a and the character recognition unit 150 may be implemented as modules of a program executed by the processor 101.

The extraction unit 130a extracts the symbols 201 to 203 based on the image 200. Further, the extraction unit 130a extracts the positions of the character strings 204 to 206. That is, the extraction unit 130a does not extract the character strings 204 to 206.

The character recognition unit 150 executes character recognition based on the image. Specifically, the character recognition unit 150 executes the character recognition based on the positions of the character strings 204 to 206. For example, the character recognition unit 150 executes the character recognition by a method described in Non-patent Reference 2. Incidentally, there are cases where the character recognition unit 150 commits a character recognition error. For example, the character recognition unit 150 misrecognizes a character string "tent" as a character string "tesot".

Next, the association determination unit 140a will be described below.

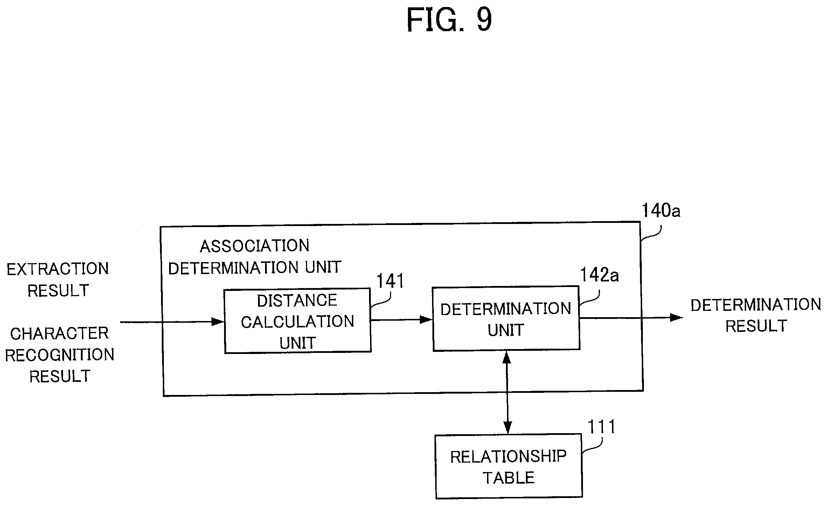

Fig. 9 is a block diagram showing functions of the association determination unit in the second embodiment. The association determination unit 140a includes a determination unit 142a.

The determination unit 142a detects a plurality of character strings which are identical or similar to a plurality of character strings obtained by the character recognition, in the relationship table 111. The determination unit 142a determines a character string having a relationship with a symbol based on the plurality of detected character strings, the relationship table 111, and the distances.

In the following, a description will be given concretely of a case of determining a character string having a relationship with the symbol 203. It is assumed that character strings "box", "tesot" and "ring buoy" have been obtained by the character recognition. The determination unit 142a detects a character string "box" identical to the character string "box", in the relationship table 111. The determination unit 142a detects a character string "tent" similar to the character string "tesot", in the relationship table 111. For example, the determination unit 142a detects a similar character string by making character string comparison. The determination unit 142a detects a character string "ring buoy" identical to the character string "ring buoy", in the relationship table 111. The determination unit 142a determines a character string having a relationship with the symbol 203 based on the detected character strings "box", "tent" and "ring buoy", the relationship table 111, and the distances. The distances are used in ascending order. For example, the determination unit 142a determines based on the relationship table 111 that the symbol 203 (i.e., triangle) and the "tent" have a relationship with each other. The association determination unit 140a outputs a determination result indicating that the symbol 203 (i.e., triangle) and the "tent" have a relationship with each other.

Next, a process executed by the information processing device 100a will be described below by using a flowchart.

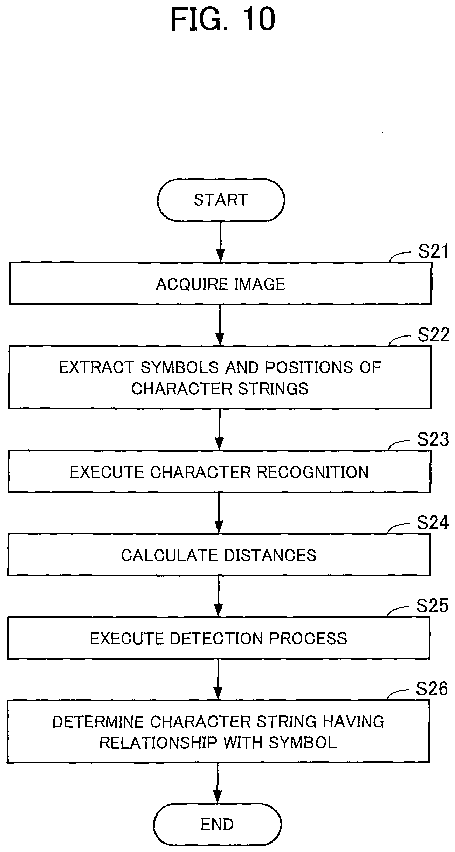

Fig. 10 is a flowchart showing an example of the process executed by the information processing device in the second embodiment.

(Step S21) The acquisition unit 120 acquires the image 200.

(Step S22) The extraction unit 130a extracts the symbols 201 to 203 and the positions of the character strings 204 to 206.

(Step S23) The character recognition unit 150 executes the character recognition based on the image.

(Step S24) The distance calculation unit 141 calculates the distances between the symbol 201 and the character strings 204 to 206. The distance calculation unit 141 calculates the distances between the symbol 202 and the character strings 204 to 206. The distance calculation unit 141 calculates the distances between the symbol 203 and the character strings 204 to 206.

(Step S25) The determination unit 142a detects a plurality of character strings which are identical or similar to a plurality of character strings obtained by the character recognition, in the relationship table 111.

(Step S26) The determination unit 142a determines a character string having a relationship with the symbol 201 based on the plurality of detected character strings, the relationship table 111, and the distances. The determination unit 142a determines a character string having a relationship with the symbol 202 based on the plurality of detected character strings, the relationship table 111, and the distances. The determination unit 142a determines a character string having a relationship with the symbol 203 based on the plurality of detected character strings, the relationship table 111, and the distances.

According to the second embodiment, the information processing device 100a is capable of detecting a character string having a relationship with a symbol even when the character recognition error has occurred.

Third Embodiment

Next, a third embodiment will be described below. In the third embodiment, the description will be given mainly of features different from those in the first embodiment. In the third embodiment, the description is omitted for features in common with the first embodiment.

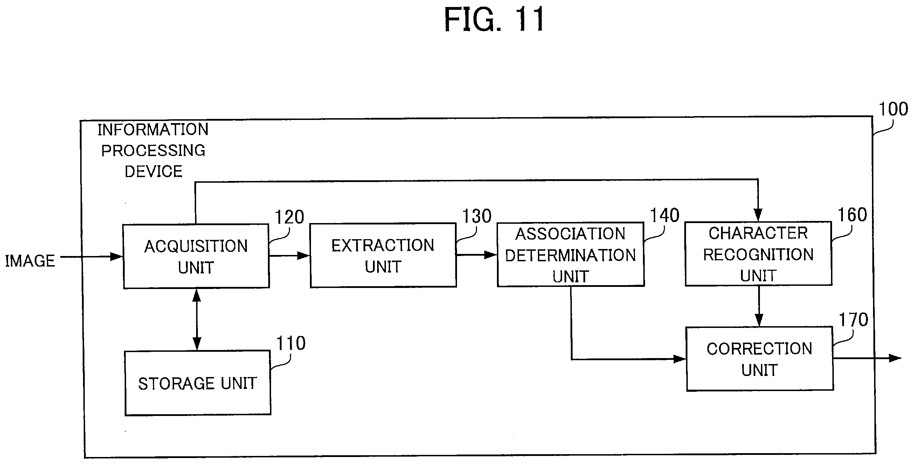

Fig. 11 is a block diagram showing functions of an information processing device in the third embodiment. Each component in Fig. 11 that is the same as a component shown in Fig. 2 is assigned the same reference character as in Fig. 2. The information processing device 100 further includes a character recognition unit 160 and a correction unit 170.

Part or all of the character recognition unit 160 and the correction unit 170 may be implemented by processing circuitry. Further, part or all of the character recognition unit 160 and the correction unit 170 may be implemented as modules of a program executed by the processor 101.

The character recognition unit 160 executes character recognition based on the image. For example, the character recognition unit 160 executes the character recognition by the method described in the Non-patent Reference 2.

The acquisition unit 120 acquires correction information. For example, the acquisition unit 120 acquires the correction information from the storage unit 110. Alternatively, for example, the acquisition unit 120 acquires the correction information from an external device. The correction information will be shown concretely below.

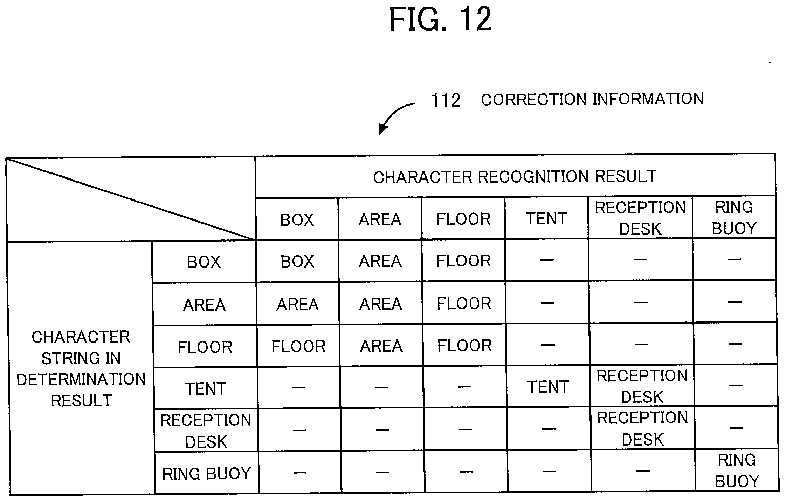

Fig. 12 is a diagram showing an example of the correction information in the third embodiment. For example, the correction information 112 has been stored in the storage unit 110. The correction information 112 is information indicating a character string that should be associated preferentially out of a character string in the character recognition result and a character string in the determination result.

The correction unit 170 identifies a character string that should be associated based on the character string in the determination result, the character recognition result as the result of the character recognition, and the correction information 112. When the character string in the determination result and the identified character string (hereinafter referred to as an identification character string) differ from each other, the correction unit 170 corrects the character string in the determination result to the identification character string. For example, the character recognition result is assumed to be "floor". The determination result indicates that "quadrangle" and "box" have a relationship with each other. That is, the character string in the determination result is "box". The correction unit 170 identifies the character string "floor" that should be associated based on the character string "box" in the determination result, the character recognition result "floor", and the correction information 112. The character string "box" in the determination result and the identification character string "floor" differ from each other. Therefore, the correction unit 170 corrects the character string "box" in the determination result to the identification character string "floor". Accordingly, information indicating that "quadrangle" and "floor" have a relationship with each other is outputted.

Next, a process executed by the information processing device 100 will be described below by using a flowchart.

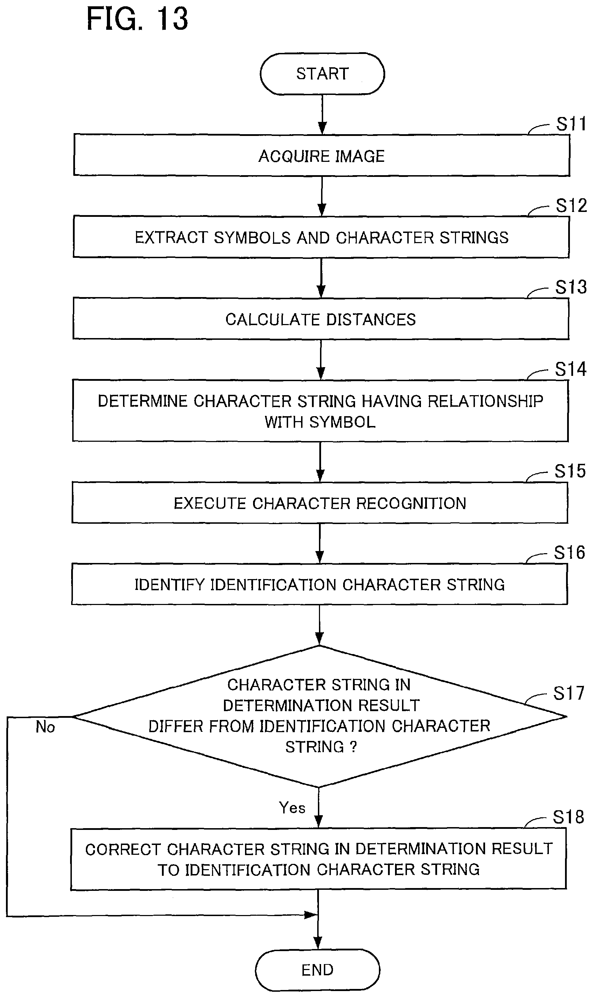

Fig. 13 is a flowchart showing an example of the process executed by the information processing device in the third embodiment. The process of Fig. 13 differs from the process of Fig. 7 in that steps S15 to S18 are executed. Therefore, the steps S15 to S18 will be described below with reference to Fig. 13. Then, the description is omitted for processing other than the steps S15 to S18.

(Step S15) The character recognition unit 160 executes the character recognition based on the image.

(Step S16) The correction unit 170 identifies the identification character string based on the character recognition result and the correction information 112.

(Step S17) The correction unit 170 determines whether or not the character string in the determination result and the identification character string differ from each other. If the two character strings differ from each other, the process advances to step S18. If the two character strings are the same as each other, the information processing device 100 outputs the determination result.

(Step S18) The correction unit 170 corrects the character string in the determination result to the identification character string.

The step S15 may be performed before the step S12. Alternatively, the step S15 may be performed in parallel with the steps S12 to S14.

According to the third embodiment, the information processing device 100 is capable of making association between the character string that should be associated preferentially and the symbol.

Further, the information processing device 100 may execute the following process. The acquisition unit 120 acquires correct answer information of a character string. The correction unit 170 calculates a correct answer level of the character string in the character recognition result as the result of the character recognition based on the correct answer information. Further, the correction unit 170 calculates the correct answer level of the character string in the determination result based on the correct answer information. The correction unit 170 compares the correct answer level of the character string in the character recognition result with the correct answer level of the character string in the determination result. If the correct answer level of the character string in the character recognition result is higher than the correct answer level of the character string in the determination result, the correction unit 170 corrects the character string in the determination result to the character string in the character recognition result.

The above process will be described specifically below. The character recognition result is assumed to be "floor". The determination result indicates that "quadrangle" and "box" have a relationship with each other. That is, the character string in the determination result is "box". The correct answer information indicates "floor". The correction unit 170 calculates the correct answer level of the character string in the character recognition result based on the correct answer information. The correction unit 170 calculates the correct answer level of the character string in the determination result based on the correct answer information. The correction unit 170 determines that the correct answer level of the character string in the character recognition result is higher than the correct answer level of the character string in the determination result. The correction unit 170 corrects the character string "box" in the determination result to the character string "floor" in the character recognition result. Accordingly, information indicating that "quadrangle" and "floor" have a relationship with each other is outputted.

As above, even when the character string in the determination result is erroneous, the information processing device 100 is capable of correcting the character string to an appropriate character string.


Fourth Embodiment


Next, a fourth embodiment will be described below. In the fourth embodiment, the description will be given mainly of features different from those in the first embodiment. In the fourth embodiment, the description is omitted for features in common with the first embodiment.

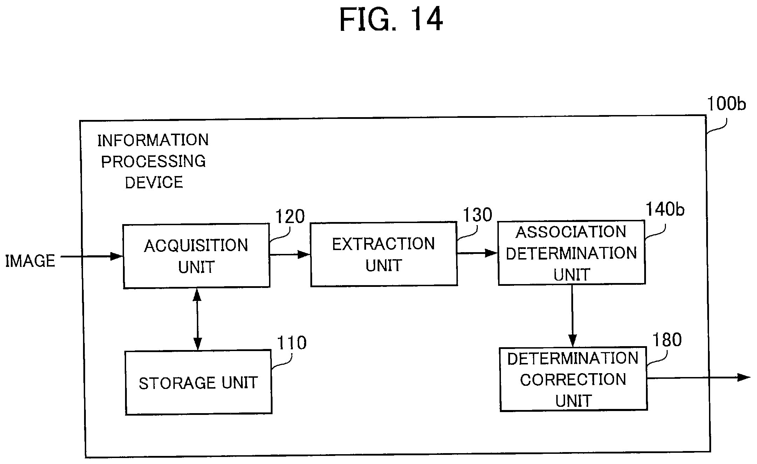

Fig. 14 is a block diagram showing functions of an information processing device in the fourth embodiment. Each component in Fig. 14 that is the same as a component shown in Fig. 2 is assigned the same reference character as in Fig. 2. The information processing device 100b includes an association determination unit 140b and a determination correction unit 180.

Part or all of the association determination unit 140b and the determination correction unit 180 may be implemented by processing circuitry. Further, part or all of the association determination unit 140b and the determination correction unit 180 may be implemented as modules of a program executed by the processor 101.

The acquisition unit 120 acquires correction information. For example, the acquisition unit 120 acquires the correction information from the storage unit 110. Alternatively, for example, the acquisition unit 120 acquires the correction information from an external device. The correction information will be shown concretely below.

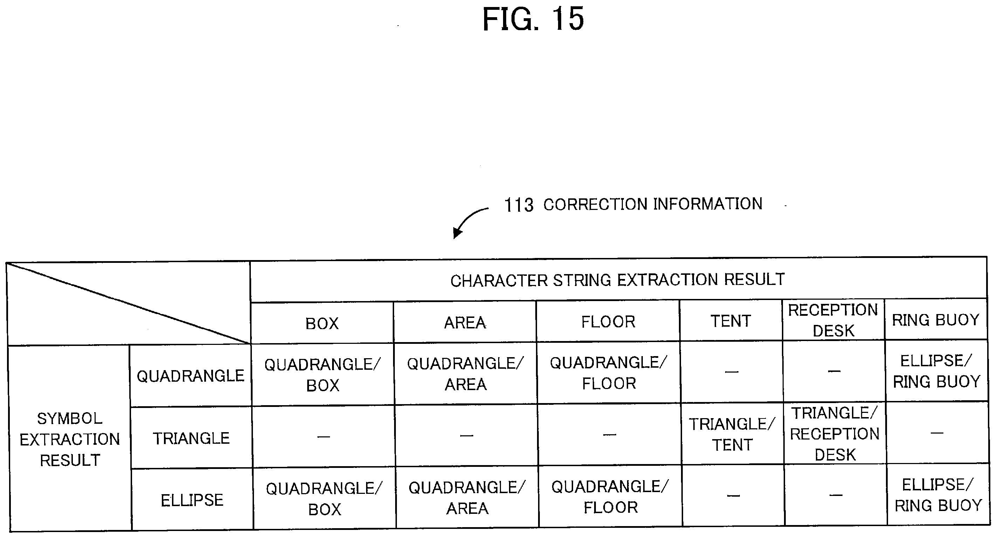

Fig. 15 is a diagram showing an example of the correction information in the fourth embodiment. For example, the correction information 113 has been stored in the storage unit 110. The correction information 113 is information for correcting the determination result. Specifically, the correction information 113 indicates a relationship between an extracted character string and an extracted symbol. A concrete way of using the correction information 113 will be explained later.

Next, the association determination unit 140b will be described below.

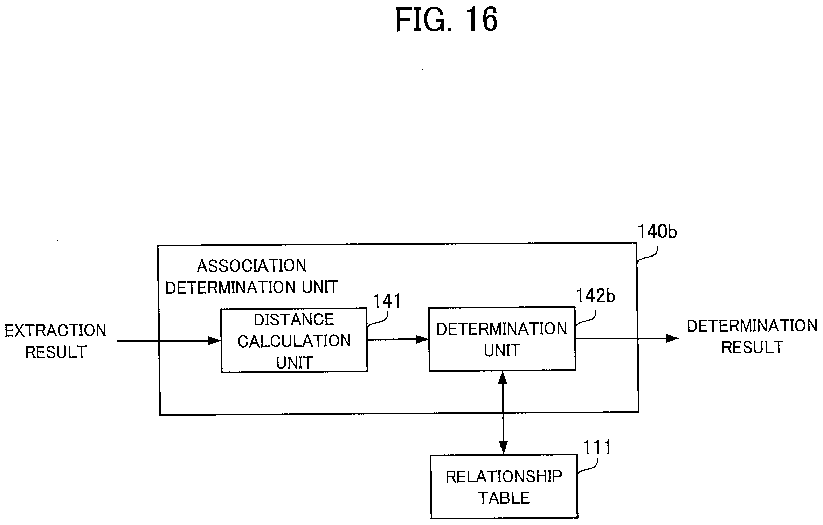

Fig. 16 is a block diagram showing functions of the association determination unit in the fourth embodiment. The association determination unit 140b includes a determination unit 142b.

The determination unit 142b identifies a combination of a symbol and a character string closest to the symbol based on the calculated distances. The determination unit 142b determines whether or not the relationship between the symbol and the character string closest to the symbol has been registered in the relationship table 111. If the relationship has been registered in the relationship table 111, the determination unit 142b outputs the relationship as the determination result.

In the case where the relationship has been registered in the relationship table 111, the determination correction unit 180 determines whether the determination result should be corrected or not based on the correction information 113. When the determination result should be corrected, the determination correction unit 180 corrects the determination result based on the correction information 113.

Next, a process executed by the information processing device 100b will be described below by using concrete examples.

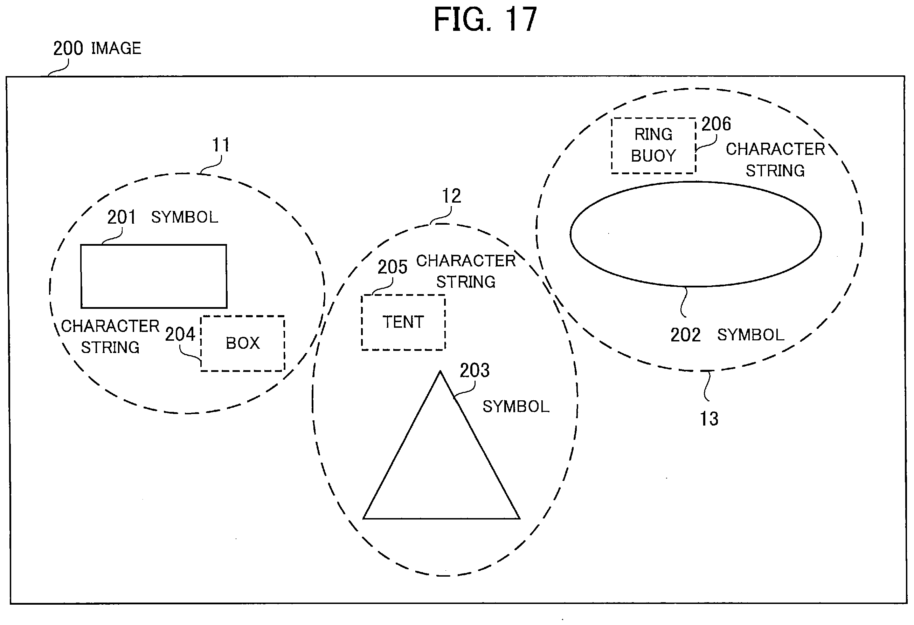

Fig. 17 is a diagram showing an example of the image in the fourth embodiment. The determination unit 142b identifies a combination of the symbol 201 and the character string 204 closest to the symbol 201 based on the calculated distances. In Fig. 17, the combination is indicated as a combination 11. The combination 11 is referred to also as a combination A. The determination unit 142b determines that the combination 11 has been registered in the relationship table 111. The determination correction unit 180 does not correct the determination result since the relationship indicated by the determination result has been registered in the correction information 113.

The determination unit 142b identifies a combination of the symbol 203 and the character string 205 closest to the symbol 203 based on the calculated distances. In Fig. 17, the combination is indicated as a combination 12. The combination 12 is referred to also as a combination B. The determination unit 142b determines that the combination 12 has been registered in the relationship table 111. The determination correction unit 180 does not correct the determination result since the relationship indicated by the determination result has been registered in the correction information 113.

The determination unit 142b identifies a combination of the symbol 202 and the character string 206 closest to the symbol 202. In Fig. 17, the combination is indicated as a combination 13. The combination 13 is referred to also as a combination C. Here, the extraction unit 130 extracts the symbol 202 as "quadrangle". The determination unit 142b determines that the combination 13 has been registered in the relationship table 111. The determination correction unit 180 corrects the determination result since the relationship indicated by the determination result has not been registered in the correction information 113. Specifically, the determination correction unit 180 corrects the determination result "quadrangle, ring buoy" to "ellipse, ring buoy" based on the correction information 113.

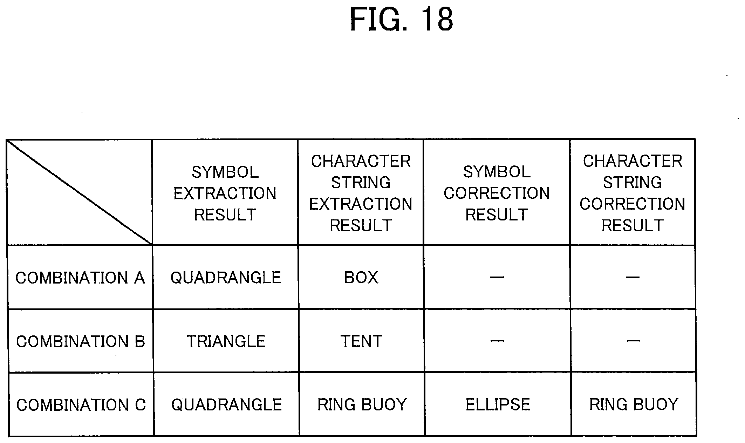

Fig. 18 is a diagram showing an example of a determination result list in the fourth embodiment. The determination result of the combination A indicates that "quadrangle" and "box" have a relationship with each other. The determination result of the combination B indicates that "triangle" and "tent" have a relationship with each other. The determination result of the combination C indicates that "ellipse" and "ring buoy" have a relationship with each other.

As described above, when the extraction unit 130 has extracted the symbol 202 erroneously as "quadrangle", the determination correction unit 180 corrects "quadrangle" to "ellipse". Accordingly, the information processing device 100b is capable of correcting an erroneously extracted symbol to a correct symbol. Then, the information processing device 100b is capable of outputting a correct determination result.

Features in the embodiments described above can be appropriately combined with each other.

## DESCRIPTION OF REFERENCE CHARACTERS

100: information processing device, 100a: information processing device, 100b: information processing device, 101: processor, 102: volatile storage device, 103: nonvolatile storage device, 110: storage unit, 111: relationship table, 112: correction information, 113: correction information, 120: acquisition unit, 130: extraction unit, 130a: extraction unit, 140: association determination unit, 140a: association determination unit, 140b: association determination unit, 141: distance calculation unit, 142: determination unit, 142a: determination unit, 142b: determination unit, 150: character recognition unit, 160: character recognition unit, 170: correction unit, 180: determination correction unit, 200: image, 201 - 203: symbol, 204 - 206: character string, 300: extraction result

## Claims

1. An information processing device (100) comprising:

   an acquisition unit (120) that acquires an image (200) including a first symbol and a plurality of character strings and relationship information (111) indicating a correspondence relationship between a symbol and a character string by associating a symbol type with one or more character strings that have a semantic relationship with the symbol type;
   an extraction unit (130) that extracts the first symbol and the plurality of character strings based on the image (200);
   a distance calculation unit (141) that calculates distances between the first symbol and the plurality of character strings based on a position of the first symbol and positions of the plurality of character strings;
   a determination unit (142) that determines a character string having a relationship with the first symbol based on the relationship information (111) and the distances;
   a character recognition unit (160) that executes character recognition based on the image (200); and
   a correction unit (170),
   wherein
   the acquisition unit (120) acquires correction information (112) indicating a character string that should be associated with the first symbol out of a character string in a character recognition result as a result of the character recognition and a character string in a determination result of the determination, and
   the correction unit (170) identifies a character string that should be associated with the first symbol based on the character string in the determination result, the character recognition result and the correction information (112), and when the character string in the determination result and an identification character string as the identified character string differ from each other, corrects the character string in the determination result to the identification character string so that the identification character string is associated with the first symbol.

2. An information processing device (100) comprising:

   an acquisition unit (120) that acquires an image (200) including a first symbol and a plurality of character strings, relationship information (111) indicating a correspondence relationship between a symbol and a character string, and correct answer information indicating a character string that should be associated with the first symbol by associating a symbol type with one or more character strings that have a semantic relationship with the symbol type;
   an extraction unit (130) that extracts the first symbol and the plurality of character strings based on the image (200);
   a distance calculation unit (141) that calculates distances between the first symbol and the plurality of character strings based on a position of the first symbol and positions of the plurality of character strings;

a determination unit (142) that determines a character string having a relationship with the first symbol based on the relationship information (111) and the distances;

a character recognition unit (160) that executes character recognition based on the image (200); and

a correction unit (170),

wherein

the correction unit (170) calculates a correct answer level of a character string in a character recognition result as a result of the character recognition based on the correct answer information, calculates the correct answer level of a character string in a determination result of the determination based on the correct answer information, and when the correct answer level of the character string in the character recognition result is higher than the correct answer level of the character string in the determination result, corrects the character string in the determination result to the character string in the character recognition result so that the character string in the character recognition result is associated with the first symbol.

3. The information processing device according to claim 1 or 2, wherein the determination unit (142) determines the character string having a relationship with the first symbol based on distances less than or equal to a predetermined threshold value among the plurality of calculated distances and the relationship information (111).

4. A processing method performed by an information processing device (100), the processing method comprising:

acquiring an image (200) including a first symbol and a plurality of character strings and relationship information (111) indicating a correspondence relationship between a symbol and a character string by associating a symbol type with one or more character strings that have a semantic relationship with the symbol type, extracting the first symbol and the plurality of character strings based on the image (200), calculating distances between the first symbol and the plurality of character strings based on a position of the first symbol and positions of the plurality of character strings, determining a character string having a relationship with the first symbol based on the relationship information (111) and the distances, executing character recognition based on the image (200), and acquiring correction information (112) indicating a character string that should be associated with the first symbol out of a character string in a character recognition result as a result of the character recognition and a character string in a determination result of the determination;

identifying a character string that should be associated with the first symbol based on the character string in the determination result, the character recognition result, and the correction information (112); and

when the character string in the determination result and an identification character string as the identified character string differ from each other, correcting the character string in the determination result to the identification character string so that the identification character string is associated with the first symbol.

5. A processing method performed by an information processing device (100), the processing method comprising:

acquiring an image (200) including a first symbol and a plurality of character strings, relationship information (111) indicating a correspondence relationship between a symbol and a character string by associating a symbol type with one or more character strings that have a semantic relationship with the symbol type, and correct answer information indicating a character string that should be associated with the first symbol, extracting the first symbol and the plurality of character strings based on the image (200), calculating distances between the first symbol and the plurality of character strings based on a position of the first symbol and positions of the plurality of character strings, determining a character string having a relationship with the first symbol based on the relationship information (111) and the distances and executing character recognition based on the image (200);

calculating a correct answer level of a character string in a character recognition result as a result of the character recognition based on the correct answer information, and calculating the correct answer level of a character string in a determination result of the determination based on the correct answer information; and

when the correct answer level of the character string in the character recognition result is higher than the correct answer level of the character string in the determination result, correcting the character string in the determination result to the character string in the character recognition result so that the character string in the character recognition result is associated with the first symbol.

6. A processing program that causes an information processing device (100) to execute the method according to claim 4 or 5.

**Patentansprüche**

1. Informationsverarbeitungseinrichtung (100), umfassend:

   eine Erwerbungseinheit (120), die ein Bild (200) erwirbt, das ein erstes Symbol und eine Vielzahl von Zeichenketten und Beziehungsinformationen (111) enthält, die eine Korrespondenzbeziehung zwischen einem Symbol und einer Zeichenkette anzeigen, indem ein Symboltyp einer oder mehreren Zeichenketten zugeordnet wird, die eine semantische Beziehung zu dem Symboltyp haben;
   eine Extraktionseinheit (130), die das erste Symbol und die Vielzahl von Zeichenketten auf der Grundlage des Bildes (200) extrahiert;
   eine Distanzberechnungseinheit (141), die Distanzen zwischen dem ersten Symbol und der Vielzahl von Zeichenketten auf der Grundlage einer Position des ersten Symbols und Positionen der Vielzahl von Zeichenketten berechnet;
   eine Bestimmungseinheit (142), die eine Zeichenkette bestimmt, die eine Beziehung zu dem ersten Symbol hat, auf der Grundlage der Beziehungsinformationen (111) und der Distanzen;
   eine Zeichenerkennungseinheit (160), die auf der Grundlage des Bildes (200) eine Zeichenerkennung ausführt; und
   eine Korrektureinheit (170),
   wobei
   die Erwerbungseinheit (120) Korrekturinformationen (112) erwirbt, die eine Zeichenkette, die dem ersten Symbol zugeordnet werden sollte, aus einer Zeichenkette in einem Zeichenerkennungsergebnis als ein Ergebnis der Zeichenerkennung und einer Zeichenkette in einem Bestimmungsergebnis der Bestimmung angeben, und
   die Korrektureinheit (170) eine Zeichenkette identifiziert, die dem ersten Symbol zugeordnet werden sollte, auf der Grundlage der Zeichenkette in dem Bestimmungsergebnis, dem Zeichenerkennungsergebnis und den Korrekturinformationen (112), und wenn die Zeichenkette in dem Bestimmungsergebnis und eine Identifikationszeichenkette als die identifizierte Zeichenkette sich voneinander unterscheiden, die Zeichenkette in dem Bestimmungsergebnis auf die Identifikationszeichenkette korrigiert, so dass die Identifikationszeichenkette dem ersten Symbol zugeordnet wird.

2. Informationsverarbeitungseinrichtung (100), umfassend:

   eine Erwerbungseinheit (120), die ein Bild (200), das ein erstes Symbol und eine Vielzahl von Zeichenketten enthält, Beziehungsinformationen (111), die eine Korrespondenzbeziehung zwischen einem Symbol und einer Zeichenkette anzeigen, und Korrekte-Antwort-Informationen, welche eine Zeichenkette anzeigen, die dem ersten Symbol zugeordnet werden sollte, indem ein Symboltyp einer oder mehreren Zeichenketten zugeordnet wird, die eine semantische Beziehung zu dem Symboltyp haben, erwirbt;
   eine Extraktionseinheit (130), die das erste Symbol und die Vielzahl von Zeichenketten auf der Grundlage des Bildes (200) extrahiert;
   eine Distanzberechnungseinheit (141), die Distanzen zwischen dem ersten Symbol und der Vielzahl von Zeichenketten auf der Grundlage einer Position des ersten Symbols und Positionen der Vielzahl von Zeichenketten berechnet;
   eine Bestimmungseinheit (142), die eine Zeichenkette bestimmt, die eine Beziehung zu dem ersten Symbol hat, auf der Grundlage der Beziehungsinformationen (111) und der Distanzen;
   eine Zeichenerkennungseinheit (160), die auf der Grundlage des Bildes (200) eine Zeichenerkennung ausführt; und
   eine Korrektureinheit (170),
   wobei
   die Korrektureinheit (170) ein Korrekte-Antwort-Niveau einer Zeichenkette in einem Zeichenerkennungsergebnis als ein Ergebnis der Zeichenerkennung auf der Grundlage der Korrekte-Antwort-Informationen berechnet, das Korrekte-Antwort-Niveau einer Zeichenkette in einem Bestimmungsergebnis der Bestimmung auf der Grundlage der Korrekte-Antwort-Informationen berechnet, und wenn das Korrekte-Antwort-Niveau der Zeichenkette in dem Zeichenerkennungsergebnis höher ist als das Korrekte-Antwort-Niveau der Zeichenkette in dem Bestimmungsergebnis, die Zeichenkette in dem Bestimmungsergebnis auf die Zeichenkette in dem Zeichenerkennungsergebnis korrigiert, so dass die Zeichenkette in dem Zeichenerkennungsergebnis dem ersten Symbol zugeordnet ist.

3. Informationsverarbeitungseinrichtung nach Anspruch 1 oder 2, wobei die Bestimmungseinheit (142) die Zeichenkette bestimmt, die eine Beziehung zu dem ersten Symbol hat, auf der Grundlage von Distanzen, die kleiner oder gleich einem vorbestimmten Schwellenwert unter der Vielzahl von berechneten Distanzen und den Beziehungsinformationen (111) sind.

4. Verarbeitungsverfahren, das von einer Informationsverarbeitungseinrichtung (100) durchgeführt wird, wobei das Verarbeitungsverfahren umfasst:

Erwerben eines Bildes (200), das ein erstes Symbol und eine Vielzahl von Zeichenketten enthält, und von Beziehungsinformationen (111), die eine Korrespondenzbeziehung zwischen einem Symbol und einer Zeichenkette anzeigen, indem ein Symboltyp einer oder mehreren Zeichenketten zugeordnet wird, die eine semantische Beziehung zu dem Symboltyp haben, Extrahieren des ersten Symbols und der Vielzahl von Zeichenketten auf der Grundlage des Bildes (200), Berechnen von Distanzen zwischen dem ersten Symbol und der Vielzahl von Zeichenketten auf der Grundlage einer Position des ersten Symbols und Positionen der Vielzahl von Zeichenketten, Bestimmen einer Zeichenkette, die eine Beziehung zu dem ersten Symbol hat, auf der Grundlage der Beziehungsinformationen (111) und der Distanzen, Ausführen von Zeichenerkennung auf der Grundlage des Bildes (200), und Erwerben von Korrekturinformationen (112), die eine Zeichenkette, die dem ersten Symbol zugeordnet werden sollte, aus einer Zeichenkette in einem Zeichenerkennungsergebnis als ein Ergebnis der Zeichenerkennung und einer Zeichenkette in einem Bestimmungsergebnis der Bestimmung angeben;
Identifizieren einer Zeichenkette, die dem ersten Symbol zugeordnet werden sollte, auf der Grundlage der Zeichenkette in dem Bestimmungsergebnis, dem Zeichenerkennungsergebnis und den Korrekturinformationen (112); und
wenn die Zeichenkette in dem Bestimmungsergebnis und eine Identifikationszeichenkette als die identifizierte Zeichenkette sich voneinander unterscheiden, Korrigieren der Zeichenkette in dem Bestimmungsergebnis auf die Identifikationszeichenkette, so dass die Identifikationszeichenkette dem ersten Symbol zugeordnet wird.

5. Verarbeitungsverfahren, das von einer Informationsverarbeitungseinrichtung (100) durchgeführt wird, wobei das Verarbeitungsverfahren umfasst:

Erwerben eines Bildes (200), das ein erstes Symbol und eine Vielzahl von Zeichenketten enthält, von Beziehungsinformationen (111), die eine Korrespondenzbeziehung zwischen einem Symbol und einer Zeichenkette anzeigen, indem ein Symboltyp einer oder mehreren Zeichenketten zugeordnet wird, die eine semantische Beziehung zu dem Symboltyp haben, und von Korrekte-Antwort-Informationen, welche eine Zeichenkette anzeigen, die dem ersten Symbol zugeordnet werden sollte, Extrahieren des ersten Symbols und der Vielzahl von Zeichenketten auf der Grundlage des Bildes (200), Berechnen von Distanzen zwischen dem ersten Symbol und der Vielzahl von Zeichenketten auf der Grundlage einer Position des ersten Symbols und Positionen der Vielzahl von Zeichenketten, Bestimmen einer Zeichenkette, die eine Beziehung zu dem ersten Symbol hat, auf der Grundlage der Beziehungsinformationen (111) und der Distanzen, und Ausführen von Zeichenerkennung auf der Grundlage des Bildes (200);
Berechnen eines Korrekte-Antwort-Niveaus einer Zeichenkette in einem Zeichenerkennungsergebnis als ein Ergebnis der Zeichenerkennung auf der Grundlage der Korrekte-Antwort-Informationen, und Berechnen eines Korrekte-Antwort-Niveaus einer Zeichenkette in einem Bestimmungsergebnis der Bestimmung auf der Grundlage der Korrekte-Antwort-Informationen; und
wenn das Korrekte-Antwort-Niveau der Zeichenkette in dem Zeichenerkennungsergebnis höher ist als das Korrekte-Antwort-Niveau der Zeichenkette in dem Bestimmungsergebnis, Korrigieren der Zeichenkette in dem Bestimmungsergebnis auf die Zeichenkette in dem Zeichenerkennungsergebnis, so dass die Zeichenkette in dem Zeichenerkennungsergebnis dem ersten Symbol zugeordnet ist.

6. Verarbeitungsprogramm, das eine Informationsverarbeitungseinrichtung (100) veranlasst, das Verfahren nach Anspruch 4 oder 5 auszuführen.

## Revendications

1. Dispositif de traitement d'informations (100) comprenant :

une unité d'acquisition (120) qui acquiert une image (200) comprenant un premier symbole et une pluralité de chaînes de caractères et des informations de relation (111) indiquant une relation de correspondance entre un symbole et une chaîne de caractères en associant un type de symbole à une ou plusieurs chaînes de caractères ayant une relation sémantique avec ce type de symbole ;

une unité d'extraction (130) qui extrait le premier symbole et la pluralité de chaînes de caractères sur la base de l'image (200) ;

une unité de calcul de distance (141) qui calcule les distances entre le premier symbole et la pluralité de chaînes de caractères sur la base d'une position du premier symbole et des positions de la pluralité de chaînes de caractères ;

une unité de détermination (142) qui détermine une chaîne de caractères ayant une relation avec le premier symbole sur la base des informations de relation (111) et des distances ;

une unité de reconnaissance de caractères (160) qui réalise une reconnaissance de caractères sur la base de l'image (200) ;

et une unité de correction (170),

dans lequel

l'unité d'acquisition (120) acquiert des informations de correction (112) indiquant une chaîne de caractères qui devrait être associée au premier symbole parmi une chaîne de caractères dans un résultat de reconnaissance de caractères à la suite de la reconnaissance de caractères et une chaîne de caractères dans un résultat de détermination de la détermination, et

l'unité de correction (170) identifie une chaîne de caractères qui devrait être associée au premier symbole sur la base de la chaîne de caractères dans le résultat de détermination, le résultat de reconnaissance de caractères et les informations de correction (112), et lorsque la chaîne de caractères dans le résultat de détermination et une chaîne de caractères d'identification considérée comme la chaîne de caractères identifiée diffèrent l'une de l'autre, corrige la chaîne de caractères dans le résultat de détermination au profit de la chaîne de caractères d'identification de sorte que la chaîne de caractères d'identification soit associée au premier symbole.

**2.** Dispositif de traitement d'informations (100) comprenant :

une unité d'acquisition (120) qui acquiert une image (200) comprenant un premier symbole et une pluralité de chaînes de caractères, des informations de relation (111) indiquant une relation de correspondance entre un symbole et une chaîne de caractères, et des informations de réponse correcte indiquant une chaîne de caractères qui devrait être associée au premier symbole en associant un type de symbole à une ou plusieurs chaînes de caractères ayant une relation sémantique avec le type de symbole ;

une unité d'extraction (130) qui extrait le premier symbole et la pluralité de chaînes de caractères sur la base de l'image (200) ;

une unité de calcul de distance (141) qui calcule les distances entre le premier symbole et la pluralité de chaînes de caractères sur la base d'une position du premier symbole et des positions de la pluralité de chaînes de caractères ;

une unité de détermination (142) qui détermine une chaîne de caractères ayant une relation avec le premier symbole sur la base des informations de relation (111) et des distances ;

une unité de reconnaissance de caractères (160) qui réalise une reconnaissance de caractères sur la base de l'image (200) ; et

une unité de correction (170),

dans lequel

l'unité de correction (170) calcule un niveau de réponse correcte d'une chaîne de caractères dans un résultat de reconnaissance de caractères à la suite de la reconnaissance de caractères sur la base des informations de réponse correcte, calcule le niveau de réponse correcte d'une chaîne de caractères dans un résultat de détermination de la détermination sur la base des informations de réponse correcte, et lorsque le niveau de réponse correcte de la chaîne de caractères dans le résultat de reconnaissance de caractères est supérieur au niveau de réponse correcte de la chaîne de caractères dans le résultat de détermination, corrige la chaîne de caractères dans le résultat de détermination au profit de la chaîne de caractères dans le résultat de reconnaissance de caractères de sorte que la chaîne de caractères dans le résultat de reconnaissance de caractères soit associée au premier symbole.

**3.** Dispositif de traitement d'informations selon la revendication 1 ou 2, dans lequel l'unité de détermination (142) détermine la chaîne de caractères ayant une relation avec le premier symbole sur la base de distances inférieures ou égales à une valeur seuil prédéterminée parmi la pluralité de distances calculées et les informations de relation (111).

**4.** Procédé de traitement réalisé par un dispositif de traitement d'informations (100), le procédé de traitement comprenant :

l'acquisition d'une image (200) comprenant un premier symbole et une pluralité de chaînes de caractères, ainsi que des informations de relation (111) indiquant une relation de correspondance entre un symbole et une chaîne de caractères en associant un type de symbole à une ou plusieurs chaînes de caractères ayant une relation sémantique avec le type de symbole, l'extraction du premier symbole et de la pluralité de chaînes de caractères sur la base de l'image (200), le calcul des distances entre le premier symbole et la pluralité de chaînes de caractères sur la base d'une position du premier symbole et des positions de la pluralité de chaînes de caractères, la détermination d'une chaîne de caractères ayant une relation avec le premier symbole sur la base des informations de relation (111) et des distances, la réalisation de la reconnaissance de caractères sur la base de l'image (200), et l'acquisition d'informations de correction (112) indiquant une chaîne de caractères qui devrait être associée au premier symbole parmi une chaîne de caractères issue d'un résultat de reconnaissance de caractères à la suite de la reconnaissance de caractères et une chaîne de caractères d'un résultat de détermination de la détermination ;

l'identification d'une chaîne de caractères qui devrait être associée au premier symbole sur la base de la chaîne de caractères dans le résultat de détermination, le résultat de reconnaissance de caractères et les informations de correction (112) ; et

lorsque la chaîne de caractères dans le résultat de détermination et une chaîne de caractères d'identification comme la chaîne de caractères identifiée diffèrent l'une de l'autre, la correction de la chaîne de caractères dans le résultat de détermination au profit de la chaîne de caractères d'identification, afin que la chaîne de caractères d'identification soit associée au premier symbole.

5. Procédé de traitement réalisé par un dispositif de traitement d'informations (100), le procédé de traitement comprenant :

l'acquisition d'une image (200) comprenant un premier symbole et une pluralité de chaînes de caractères, des informations de relation (111) indiquant une relation de correspondance entre un symbole et une chaîne de caractères en associant un type de symbole à une ou plusieurs chaînes de caractères ayant une relation sémantique avec le type de symbole, et des informations de réponse correcte indiquant une chaîne de caractères qui devrait être associée au premier symbole, l'extraction du premier symbole et de la pluralité de chaînes de caractères sur la base de l'image (200), le calcul des distances entre le premier symbole et la pluralité de chaînes de caractères sur la base d'une position du premier symbole et des positions de la pluralité de chaînes de caractères, la détermination d'une chaîne de caractères ayant une relation avec le premier symbole sur la base des informations de relation (111) et des distances et la réalisation de la reconnaissance de caractères sur la base de l'image (200) ;

le calcul d'un niveau de réponse correcte d'une chaîne de caractères dans un résultat de reconnaissance de caractères à la suite de la reconnaissance de caractères sur la base des informations de réponse correcte, et le calcul du niveau de réponse correcte d'une chaîne de caractères dans un résultat de détermination de la détermination sur la base des informations de réponse correcte ; et

lorsque le niveau de réponse correcte de la chaîne de caractères dans le résultat de reconnaissance de caractères est supérieur au niveau de réponse correcte de la chaîne de caractères dans le résultat de détermination, la correction de la chaîne de caractères dans le résultat de détermination au profit de la chaîne de caractères dans le résultat de reconnaissance de caractères, de sorte que la chaîne de caractères dans le résultat de reconnaissance de caractères soit associée au premier symbole.

6. Programme de traitement qui amène un dispositif de traitement d'informations (100) à exécuter le procédé selon la revendication 4 ou 5.

# FIG. 1

INFORMATION PROCESSING DEVICE — 100

PROCESSOR — 101

VOLATILE STORAGE DEVICE — 102

NONVOLATILE STORAGE DEVICE — 103

# FIG. 2

INFORMATION PROCESSING DEVICE — 100

IMAGE → ACQUISITION UNIT (120) → EXTRACTION UNIT (130) → ASSOCIATION DETERMINATION UNIT (140) → DETERMINATION RESULT

ACQUISITION UNIT (120) ↕ STORAGE UNIT (110)

EP 4 492 341 B1

# FIG. 3

200 IMAGE

206 CHARACTER STRING

RING BUOY

201 SYMBOL

205 CHARACTER STRING

TENT

202 SYMBOL

CHARACTER STRING 204

BOX

203 SYMBOL

EP 4 492 341 B1

# FIG. 4

300 EXTRACTION RESULT

| ELEMENT | START POINT COORDINATES | WIDTH | HEIGHT | RESULT |
|---|---|---|---|---|
| SYMBOL 1 | START POINT (10, 10) | W = 50 | H = 50 | QUADRANGLE |
| SYMBOL 2 | START POINT (200, 10) | W = 100 | H = 50 | ELLIPSE |
| SYMBOL 3 | START POINT (30, 60) | W = 150 | H = 50 | TRIANGLE |
| CHARACTER STRING 1 | START POINT (20, 50) | W = 30 | H = 20 | BOX |
| CHARACTER STRING 2 | START POINT (40, 30) | W = 30 | H = 20 | TENT |
| CHARACTER STRING 3 | START POINT (220, 30) | W = 30 | H = 20 | RING BUOY |

# FIG. 5

| RELATIONSHIP TABLE | |
|---|---|
| SYMBOL | CHARACTER STRING |
| QUADRANGLE | BOX |
| | AREA |
| | FLOOR |
| | RING BUOY |
| TRIANGLE | TENT |
| | RECEPTION DESK |
| ELLIPSE | RING BUOY |

111

# FIG. 6

EXTRACTION
RESULT

ASSOCIATION
DETERMINATION UNIT    140

DISTANCE
CALCULATION
UNIT    141

DETERMINATION
UNIT    142

DETERMINATION
RESULT

RELATIONSHIP
TABLE    111

EP 4 492 341 B1

# FIG. 7

```
        ┌─────────────┐
        │    START    │
        └──────┬──────┘
               │
               ▼                    ⌐ S11
   ┌───────────────────────────────┐
   │        ACQUIRE IMAGE          │
   └───────────────┬───────────────┘
                   │
                   ▼                ⌐ S12
   ┌───────────────────────────────┐
   │ EXTRACT SYMBOLS AND CHARACTER  │
   │           STRINGS              │
   └───────────────┬───────────────┘
                   │
                   ▼                ⌐ S13
   ┌───────────────────────────────┐
   │      CALCULATE DISTANCES       │
   └───────────────┬───────────────┘
                   │
                   ▼                ⌐ S14
   ┌───────────────────────────────┐
   │ DETERMINE CHARACTER STRING     │
   │     HAVING RELATIONSHIP        │
   │         WITH SYMBOL            │
   └───────────────┬───────────────┘
                   │
                   ▼
        ┌─────────────┐
        │     END     │
        └─────────────┘
```

# FIG. 8

INFORMATION PROCESSING DEVICE

100a

IMAGE → ACQUISITION UNIT (120)

STORAGE UNIT (110)

EXTRACTION UNIT (130a)

CHARACTER RECOGNITION UNIT (150)

ASSOCIATION DETERMINATION UNIT (140a) → DETERMINATION RESULT

# FIG. 9

EP 4 492 341 B1

EXTRACTION
RESULT

CHARACTER
RECOGNITION
RESULT

ASSOCIATION
DETERMINATION UNIT                                    140a

DISTANCE
CALCULATION    141          DETERMINATION    142a
UNIT                         UNIT                                    DETERMINATION
                                                                     RESULT

RELATIONSHIP    111
TABLE

# FIG. 10

```
          ┌─────────────┐
          │    START    │
          └──────┬──────┘
                 │                    ┌─ S21
       ┌─────────▼──────────┐
       │   ACQUIRE IMAGE    │
       └─────────┬──────────┘
                 │                    ┌─ S22
       ┌─────────▼──────────┐
       │ EXTRACT SYMBOLS AND│
       │ POSITIONS OF       │
       │ CHARACTER STRINGS  │
       └─────────┬──────────┘
                 │                    ┌─ S23
       ┌─────────▼──────────┐
       │ EXECUTE CHARACTER  │
       │   RECOGNITION      │
       └─────────┬──────────┘
                 │                    ┌─ S24
       ┌─────────▼──────────┐
       │ CALCULATE DISTANCES│
       └─────────┬──────────┘
                 │                    ┌─ S25
       ┌─────────▼──────────┐
       │ EXECUTE DETECTION  │
       │     PROCESS        │
       └─────────┬──────────┘
                 │                    ┌─ S26
       ┌─────────▼──────────┐
       │ DETERMINE CHARACTER│
       │ STRING HAVING      │
       │ RELATIONSHIP WITH  │
       │ SYMBOL             │
       └─────────┬──────────┘
                 │
          ┌──────▼──────┐
          │     END     │
          └─────────────┘
```

# FIG. 11

INFORMATION
PROCESSING
DEVICE — 100

IMAGE →

ACQUISITION UNIT — 120

EXTRACTION UNIT — 130

ASSOCIATION DETERMINATION UNIT — 140

CHARACTER RECOGNITION UNIT — 160

STORAGE UNIT — 110

CORRECTION UNIT — 170

EP 4 492 341 B1

# FIG. 12

112 CORRECTION INFORMATION

| | | CHARACTER RECOGNITION RESULT | | | | | |
|---|---|---|---|---|---|---|---|
| | | BOX | AREA | FLOOR | TENT | RECEPTION DESK | RING BUOY |
| CHARACTER STRING IN DETERMINATION RESULT | BOX | BOX | AREA | FLOOR | — | — | — |
| | AREA | AREA | AREA | FLOOR | — | — | — |
| | FLOOR | FLOOR | AREA | FLOOR | — | — | — |
| | TENT | — | — | — | TENT | RECEPTION DESK | — |
| | RECEPTION DESK | — | — | — | — | RECEPTION DESK | — |
| | RING BUOY | — | — | — | — | — | RING BUOY |

EP 4 492 341 B1

# FIG. 13

```
                    ┌─────────────┐
                    │    START    │
                    └──────┬──────┘
                           │
                           ▼                              ╭─ S11
        ┌──────────────────────────────────────────────┐
        │              ACQUIRE IMAGE                    │
        └──────────────────┬───────────────────────────┘
                           │
                           ▼                              ╭─ S12
        ┌──────────────────────────────────────────────┐
        │     EXTRACT SYMBOLS AND CHARACTER STRINGS     │
        └──────────────────┬───────────────────────────┘
                           │
                           ▼                              ╭─ S13
        ┌──────────────────────────────────────────────┐
        │             CALCULATE DISTANCES               │
        └──────────────────┬───────────────────────────┘
                           │
                           ▼                              ╭─ S14
        ┌──────────────────────────────────────────────┐
        │   DETERMINE CHARACTER STRING HAVING           │
        │   RELATIONSHIP WITH SYMBOL                    │
        └──────────────────┬───────────────────────────┘
                           │
                           ▼                              ╭─ S15
        ┌──────────────────────────────────────────────┐
        │         EXECUTE CHARACTER RECOGNITION         │
        └──────────────────┬───────────────────────────┘
                           │
                           ▼                              ╭─ S16
        ┌──────────────────────────────────────────────┐
        │     IDENTIFY IDENTIFICATION CHARACTER STRING  │
        └──────────────────┬───────────────────────────┘
                           │
                           ▼
              CHARACTER STRING IN                         ╭─ S17
              DETERMINATION RESULT
     No       DIFFER FROM IDENTIFICATION CHARACTER
              STRING ?
                           │ Yes
                           ▼                              ╭─ S18
        ┌──────────────────────────────────────────────┐
        │  CORRECT CHARACTER STRING IN DETERMINATION    │
        │  RESULT TO IDENTIFICATION CHARACTER STRING    │
        └──────────────────┬───────────────────────────┘
                           │
                           ▼
                    ┌─────────────┐
                    │     END     │
                    └─────────────┘
```

# FIG. 14

INFORMATION PROCESSING DEVICE  100b

IMAGE → ACQUISITION UNIT  120 → EXTRACTION UNIT  130 → ASSOCIATION DETERMINATION UNIT  140b → DETERMINATION CORRECTION UNIT  180 →

STORAGE UNIT  110

EP 4 492 341 B1

# FIG. 15

EP 4 492 341 B1

113 CORRECTION INFORMATION

| | | CHARACTER STRING EXTRACTION RESULT | | | | | |
|---|---|---|---|---|---|---|---|
| | | BOX | AREA | FLOOR | TENT | RECEPTION DESK | RING BUOY |
| SYMBOL EXTRACTION RESULT | QUADRANGLE | QUADRANGLE/ BOX | QUADRANGLE/ AREA | QUADRANGLE/ FLOOR | — | — | ELLIPSE/ RING BUOY |
| | TRIANGLE | — | — | — | TRIANGLE/ TENT | TRIANGLE/ RECEPTION DESK | — |
| | ELLIPSE | QUADRANGLE/ BOX | QUADRANGLE/ AREA | QUADRANGLE/ FLOOR | — | — | ELLIPSE/ RING BUOY |

# FIG. 16

EXTRACTION RESULT →

**ASSOCIATION DETERMINATION UNIT** — 140b

DISTANCE CALCULATION UNIT — 141 → DETERMINATION UNIT — 142b → DETERMINATION RESULT

RELATIONSHIP TABLE — 111

EP 4 492 341 B1

# FIG. 17

200 IMAGE

11

201 SYMBOL

CHARACTER 204
STRING

BOX

12

205 CHARACTER
STRING

TENT

203

SYMBOL

206

RING
BUOY

CHARACTER
STRING

202 SYMBOL

13

EP 4 492 341 B1

# FIG. 18

| | SYMBOL EXTRACTION RESULT | CHARACTER STRING EXTRACTION RESULT | SYMBOL CORRECTION RESULT | CHARACTER STRING CORRECTION RESULT |
|---|---|---|---|---|
| COMBINATION A | QUADRANGLE | BOX | — | — |
| COMBINATION B | TRIANGLE | TENT | — | — |
| COMBINATION C | QUADRANGLE | RING BUOY | ELLIPSE | RING BUOY |

EP 4 492 341 B1

**REFERENCES CITED IN THE DESCRIPTION**

**Patent documents cited in the description**

- US 2017228589 A1
- US 5251268 A
- US 2020175372 A1
- WO 2020054067 A1
- JP 2006227824 A
- US 2020175211 A1
- JP 6076128 B

**Non-patent literature cited in the description**

- **SHOGO YONEYAMA** ; **TAKASHI HIRANO** ; **YASU-HIRO OKADA**. Extracting Symbol Information in Engineering Drawing Image. *March Proceedings of the IEICE General Conference*, March 2006
- **T. HIRANO et al.** Structural Character Recognition Using Simulated Annealing. *ICDAR*, August 1997